# EUROPÄISCHE PATENTSCHRIFT

(11) **EP 2 261 591 B1**
(45) Veröffentlichungstag und Bekanntmachung des Hinweises auf die Patenterteilung: **02.04.2014**
(21) Anmeldenummer: 10001814.2
(22) Anmeldetag: 23.02.2010
(51) Int. Cl.: F41G 7/26, G05D 1/10, F41G 7/30

(54) **Verfahren zur Korrektur der Flugbahn einer endphasengelenkten Munition**
Method for correcting the flight path of ammunition steered during the end phase
Procédé de correction de la trajectoire d'une munition dirigée en phase finale

(30) Priorität: 08.06.2009 DE 102009024508
(43) Veröffentlichungstag der Anmeldung: 15.12.2010
(73) Patentinhaber: Rheinmetall Air Defence AG, 8050 Zürich (CH)
(72) Erfinder: Seidensticker, Jens, Dr., 78315 Radolfzell (DE)
(74) Vertreter: Dietrich, Barbara

(56) Entgegenhaltungen:
- EP-A1- 0 319 649
- EP-A1- 1 726 911
- DE-A1- 3 131 394
- US-A- 3 860 199

## Beschreibung

Die Erfindung beschäftigt sich mit einer so genannten Geschossprägung für insbesondere endphasengelenkte Geschosse bzw. Munition im Mittelkaliberbereich. Die Geschossprägung erfolgt auf dem Prinzip der Leitstrahllenkung von Geschossen, wobei jedes Geschoss dabei nur den für das Geschoss bestimmten Leitstrahl liest und anhand weiterer Informationen seine absolute Rolllage im Raum bestimmen kann, um so zur richtigen Auslösung des Korrekturimpulses zu gelangen.

Endphasenlenkung für aus einem Waffenrohr verschossene Munition ist infolge diverser Abschussbelastungen mit Einschränkungen versehen. Die Sensor- und Lenkelemente müssen robust ausgelegt werden. Bei der Mittelkalibermunition kommt hinzu, dass das Einbauvolumen beschränkt ist. Insbesondere Suchköpfe mit ihren Inertialsensoren lassen, da auch eine Nutzlast mittransportiert werden muss, sich nicht immer unterbringen, insbesondere nicht bei der Mittelkalibermunition. Deshalb greift man auf platzsparende Techniken zurück, wobei sich halbaktive Verfahren wie Leitstrahllenkung (Beam- Rider) herausgebildet haben. Hierbei projizieren beispielsweise vier codierte Laser ein Muster auf die Flugsollbahn. Anhand der Bereiche, die ein Hecksensor des Geschosses sieht, kann das Geschoss seine individuelle Ablage aus seinem Laserstrahl bestimmen.

Die DE 35 01 955 C2 offenbart ein Zielauswahlverfahren für endphasengelenkte Munition bzw. Lenkflugkörper. Um eine effektive Ausnutzung derartiger Munitionen zu erhalten wird vorgeschlagen, dass in einem Signalempfänger jedes Suchkopfes die vom gerade verfolgten Ziel reflektierte Strahlung daraufhin analysiert wird, ob das von einem anderen Suchkopf ausgesendete Signal darin enthalten ist oder nicht. Ist dies der Fall, sucht sich der Lenkkörper ein neues Ziel.

Ein endphasengelenkter Abwurfkörper zur Bekämpfung von Schallsignalen abgebenden Zielen ist des Weiteren aus der DE 32 28 461 C2 bekannt. Bei Erkennen einer entsprechenden Schallquelle, wie beispielsweise der Schall eines Panzers, der einen anderen Schall als einfache Radfahrzeuge aussendet, werden über einen passiven akustischen Sensor in Abhängigkeit des Sensorsignals Querkräfte auf den Abwurfkörper erzeugt und der Abwurfkörper auf das Ziel hin bewegt.

Ein Waffensystem für gelenkte Punktbekämpfung von Mehrfachzielen zeigt die DE 28 29 934 A1 auf. Durch Auswertung über einen Rechner wird das zum jeweiligen Ziel günstigere Geschoss ausgewählt, in Schussposition gedreht und mit definiertem seitlichen Vorhalt gezielt auf das Ziel abgefeuert.

Eine Sensoranordnung in einem Suchkopf wird in der DE 33 42 958 C2 publiziert. Der Sensor ist über Koppelstangen an ein axial dahinter versetztes zweiachsiges Kardanrahmsystem für Bewegungen des Sensors relativ zum Suchkopf angelenkt. Der Sensor als auch das Kardanrahmsystem sind jeweils in einer Kugelflächenpaarung gehalten.

Ein Geschoss sowie ein Verfahren zur Flugbahnkorrektur beschreibt die DE 198 45 611 A1. Hierbei wird ein Magnetfeldsensor dazu genutzt, die Rolllage der Korrektureinheit zu kennen.

Verfahren zur Bestimmung der Rolllage eines rollenden Flugobjektes sind der EP 0 745 828 B1 sowie der EP 0 742 420 B1 entnehmbar. Eine Anordnung zur Ermittlung der Rollwinkellage offenbart die EP 0 319 649 A1.

Aus der EP 1 726 911 A1 ist ein Verfahren und eine Vorrichtung zur Tempierung und / oder Korrektur des Zündzeitpunktes eines Geschosses bekannt. Dabei wird zur kompensierten Tempierung ein Mikrowellensender am Geschütz eingebunden und dem Geschoss nachgesandt.

Die US 3,860,199 A betrifft eine lasergestützte Munition, deren Flugbahn bei Abweichung korrigiert werden kann. Dabei wird auch die Auswirkung des Erdmagnetfeldes berücksichtigt, wozu die Munition zwei Helmholtzspulen besitzt, die ihrerseits mit unterschiedlichen Signalen versorgt werden.

Die Erfindung stellt sich die Aufgabe, ein Verfahren aufzuzeigen, das einen effektiven Einsatz der Geschosse bei einer optimalen Zielbekämpfung ermöglicht.

Gelöst wird die Aufgabe durch die Merkmale des Patentanspruchs 1. Vorteilhafte Ausführungen sind in den Unteransprüchen aufgezeigt.

Bekanntlich werden zur Trefferwahrscheinlichkeitserhöhung insbesondere im Mittelkaliberbereich häufig Salven / Feuerstöße verschossen, so dass in der Regel nur eine Schwarmkorrektur durchgeführt wird, d. h., alle Geschosse erhalten eine Pauschalkorrektur. Bei bekannten AHEAD- Verfahren wird jedes Geschoss an der Rohrmündung tempiert, damit das Geschoss seine Nutzlast, beispielsweise Wolframsubmunitionen, kurz vor dem Ziel ausstößt und dieses zerstört.

Der Erfindung liegt daher die Idee zugrunde, insbesondere nach einem Feuerstoß (Dauerfeuer, schnelles Einzelfeuer) jedes einzelne Geschoss separat anzusprechen und dabei zusätzliche Informationen für das Einzelgeschoss für die Richtung des Erdmagnetfeldes zu übermitteln. Die Geschossprägung erfolgt auf dem Prinzip der Leitstrahllenkung von Geschossen. Jedes Geschoss liest dabei nur den für das Geschoss bestimmten Leitstrahl und kann anhand weiterer Informationen seine absolute Rolllage im Raum bestimmen, um so zur richtigen Auslösung des Korrekturimpulses zu gelangen. Diese Prägung wird beispielsweise in Anlehnung an das AHEAD- Verfahren mit einer Induktionsspule an der Rohrmündung dem Geschoss übermittelt (CH 691 143 A5). Alternative Übertragungsmöglichkeiten, beispielsweise mittels Mikrowellensender, sind dem Fachmann beispielsweise aus der EP 1 726 911 A1 bekannt.

Ausgehend davon, dass bekannt endphasengelenkte Geschosse ihre Lage im Raum nicht bestimmen können, da sie sich im freien Fall befinden und somit keine Schwerkraft detektiert wird, wird der Einsatz eines Magnetsensors vorgesehen. Dieser kann zwar das irdische Magnetfeld messen und die Richtung der magnetischen Feldlinien detektieren, jedoch reichen diese Informationen allein nicht aus, da die Richtung der magnetischen Feldlinie einerseits von der Position auf der Erde und andererseits von der Richtung der ballistischen Schussbahn abhängt. In Weiterführung wird daher der Munition bzw. dem Geschoss auch die lokale Richtung des Erdmagnetfeldes beim Tempieren der Munition aufgeprägt. Das Aufprägen kann an verschiedenen Positionen erfolgen, wie in der Waffe, im Rohr oder im Flug.

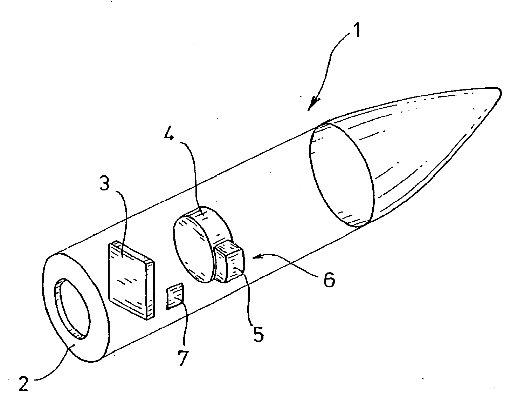

Anhand eines einfach dargestellten Ausführungsbeispiels mit Zeichnung soll die Erfindung näher erläutert werden. Es zeigt die einzige Figur die wesentlichen Teile eines Geschosses 1 für die Umsetzung der Idee. Das Geschoss verfügt hierbei über einen Hecksensor 2, einen Magnetfeldsensor 3, Sprengstoff 4 sowie wenigstens ein Ausstoßelement 5 als Korrekturimpulstriebwerk 6. Mit 7 ist eine Auswerteeinrichtung gekennzeichnet, die funktional mit den anderen Baugruppen in Verbindung steht.

### Die Funktion ist wie folgt:

Der Magnetfeldsensor 3 erkennt einerseits die Drehzahl (Rollrate) des Geschosses 1 und die Richtung des Magnetfeldes relativ zum Geschoss 1. Durch die vorher übermittelten Abweichwinkel des irdischen Magnetfeldes von der senkrechten Richtung des Erdschwerefeldes kann die geostationäre Rolllage des Geschosses 1 in der Auswerteeinheit 7 ermittelt werden. Durch die nunmehr vorgenommene Prägung, beispielsweise beim Mündungsdurchlauf des Geschosses 1, erkennt das Geschoss 1 bzw. die Auswerteeinheit 7 während des Fluges seine individuelle Abweichung anhand des für das Geschoss 1 speziell generierten Leitstrahls. Der Leitstrahl selbst wird hierbei beispielsweise vom Abschussort ausgestrahlt. Nunmehr korrigiert das Geschoss 1 seine Ist- Bahn auf die Soll- Bahn durch Initiieren des / der Korrekturimpulstriebwerke(s) 6 in bekannter Art und Weise.

## Patentansprüche

1. Verfahren zur Flugbahnkorrektur von aus einem Waffenrohr oder dergleichen insbesondere in Salven abgeschossenen, endphasengelenkten Munitionen (1), mit zumindest einem Sensor (2) zum Empfangen einer Information, einem Magnetfeldsensor (3) sowie einer Auswerteeinheit (7) und wenigstens einem Korrekturimpulswerk (6), mit den Schritten:
- Separates Ansprechen jeder einzelnen Munition (1) und Übermittlung zusätzlicher Informationen für die Einzelmunition für die Richtung des Erdmagnetfeldes durch Aufprägen eines individuellen Leitstrahls mit der lokalen Richtung des Erdmagnetfeldes beim Tempieren der Munition (1), wobei jede Munition (1) nur den für die Munition (1) bestimmten Leistrahl liest,
- Erkennen der Richtung des Erdmagnetfeldes relativ zur Munition (1) durch den Magnetfeldsensor (3),
- Bestimmen der Rolllage der Munition (1) in der Auswerteeinheit (7), wobei durch den Sensor (2) der individuelle Leitstrahl und damit in der Auswerteeinheit (7) die individuelle Abweichung der einzelnen Munition (1) erkannt wird, sodass
- anhand dieser Informationen in der Auswerteeinheit (7) die Auslösung des Korrekturimpulswerkes (6) initiiert werden kann.

2. Verfahren nach Anspruch 1, **dadurch gekennzeichnet, dass** der Leitstrahl ein Laserstrahl ist.

3. Verfahren nach Anspruch 1 oder 2, **dadurch gekennzeichnet, dass** das Aufprägen in der Waffe, beim Durchlauf der Munition (1) durch das Waffenrohr oder im Flug erfolgt.

4. Verfahren nach Anspruch 3, **dadurch gekennzeichnet, dass** das Aufprägen mittels nachgesendeten Mikrowellen erfolgt.

## Claims

1. Method of flight path correction of ammunition (1) fired from a barrel of a weapon or similar in particular in salvoes and steered during the end phase, having at least one sensor (2) for receiving information, a magnetic field sensor (3) and an evaluation unit (7) and at least one correction pulse arrangement (8), comprising the steps:
- Separate response of each individual ammunition item (1) and transmitting additional information for the individual ammunition item for the direction of the Earth's magnetic field by the formation of an individual guide beam with the local direction of the Earth's magnetic field when setting the time fuse of the ammunition item (1), wherein each ammunition item (1) only reads the guide beam specified for the ammunition item (1),
- detecting the direction of the Earth's magnetic field relative to the ammunition item (1) by the magnetic field sensor (3),
- determining the roll position of the ammunition item (1) in the evaluation unit (7), wherein the individual guide beam is detected by the sensor (2) and hence the individual deviation of the individual item of ammunition (1) is detected in the evaluation unit (7), so that
- the triggering of the correction pulse arrangement (8) can be initiated using said information in the evaluation unit (7).

2. Method according to Claim 1, **characterized in that** the guide beam is a laser beam.

3. Method according to Claim 1 or 2, **characterized in that** the formation takes place in the weapon, during the passage of the ammunition item (1) through the barrel of the weapon or in flight.

4. Method according to Claim 3, **characterized in that** the formation takes place using redirected microwaves.

## Revendications

1. Procédé de correction de la trajectoire de vol de munitions (1) guidées en phase finale tirées depuis un canon ou similaire, notamment en rafales, comprenant au moins un capteur (2) pour recevoir une information, un capteur de champ magnétique (3) ainsi qu'une unité d'interprétation (7) et au moins un mécanisme à impulsion de correction (6), comprenant les étapes suivantes :
- entrée en contact séparée avec chaque munition (1) individuelle et communication d'informations supplémentaires pour la munition individuelle pour la direction du champ magnétique terrestre en imprimant la marque d'un rayon de guidage individuel avec la direction locale du champ magnétique terrestre lors de l'amorçage de la munition (1), chaque munition (1) ne lisant que le rayon de guidage destiné à la munition (1),
- reconnaissance de la direction du champ magnétique terrestre par rapport à la munition (1) par le capteur de champ magnétique (3),
- détermination de la position de roulis de la munition (1) dans l'unité d'interprétation (7), le rayon de guidage individuel étant reconnu par le capteur (2) et ainsi l'écart individuel de la munition (1) individuelle étant reconnu dans l'unité d'interprétation (7), de sorte que
- le déclenchement du mécanisme à impulsion de correction (6) peut être initié dans l'unité d'interprétation (7) au moyen de ces informations.

2. Procédé selon la revendication 1, **caractérisé en ce que** le rayon de guidage est un rayon laser.

3. Procédé selon la revendication 1 ou 2, **caractérisé en ce que** l'impression de la marque est effectuée dans l'arme, lors du passage de la munition (1) à travers le canon ou en vol.

4. Procédé selon la revendication 3, **caractérisé en ce que** l'impression de la marque est effectuée au moyen d'hyperfréquences émises postérieurement.
